# FASCICULE DE BREVET EUROPEEN

(11) **EP 3 022 091 B1**
(45) Date de publication et mention de la délivrance du brevet: **29.11.2017**
(21) Numéro de dépôt: 14790147.4
(22) Date de dépôt: 18.07.2014
(51) Int. Cl.: B60R 13/02, B60R 13/08, F16B 5/06

(54) **PIÈCE D'HABILLAGE D'UN ÉLÉMENT DE CARROSSERIE D'UN VÉHICULE AUTOMOBILE**
VERKLEIDUNGSTEIL FÜR EIN KAROSSERIEELEMENT EINES KRAFTFAHRZEUGS
TRIM PIECE OF A CAR BODY ELEMENT OF A MOTOR VEHICLE

(30) Priorité: 19.07.2013 FR 1357117
(43) Date de publication de la demande: 25.05.2016
(73) Titulaire: Renault s.a.s, 92100 Boulogne-Billancourt (FR)
(72) Inventeur: BOUILLON, Jean-Charles, F-78940 La Queue les Yvelines (FR)
(86) Numéro de dépôt international: PCT/FR2014/051843
(87) Numéro de publication internationale: WO 2015/008001

(56) Documents cités:
- WO-A1-98/04438
- DE-A1-102008 012 010
- GB-A- 2 304 648
- US-A- 4 352 522

## Description

L'invention concerne une pièce d'habillage d'un élément de carrosserie d'un véhicule automobile.

L'habitacle d'un véhicule automobile comporte classiquement des pièces d'habillage en matière polymère destinées à recouvrir les parties métalliques internes d'éléments de carrosserie du véhicule.

Ces pièces d'habillage permettent d'améliorer l'esthétique de l'habitacle du véhicule tout en présentant des fonctions d'isolation phonique et thermique en réduisant dans ce dernier cas « la sensation de froid » pour un conducteur ou voyageur ou, dit autrement, en limitant le rayonnement froid vers les passagers. En outre, de telles pièces d'habillage peuvent garantir une sécurité pour les personnes, notamment en cas de chocs.

Toutefois, dans bien des cas, les pièces d'habillage ne peuvent garantir à elles seules des performances suffisantes en termes de réduction du bruit et/ou d'isolation thermique, notamment lors des conditions extrêmes de températures et de vitesses élevées.

Pour pallier cet inconvénient, il est prévu d'ajouter un élément supplémentaire ayant une fonction d'isolation acoustique et/ou thermique entre la pièce d'habillage et l'élément de carrosserie du véhicule. Cet élément isolant acoustique et/ou thermique recouvre partiellement ou totalement la surface de la pièce d'habillage. Un tel élément isolant se présente habituellement sous la forme d'une couche en mousse polymère ou en feutre de fibres, ce feutre pouvant être constitué de fibres de polymère extrudé ou de fibres issues de tissus recyclés déchiquetés.

Afin d'accroître les performances d'isolation thermique et/ou phonique, il peut également être prévu une couche d'air entre l'élément de carrosserie du véhicule et l'élément isolant. On peut également prévoir une couche d'air supplémentaire entre l'élément isolant et la pièce d'habillage.

Le maintien ou la fixation de l'élément isolant sur la pièce d'habillage d'un véhicule peut être effectué de plusieurs manières.

On peut par exemple fixer l'élément isolant par plaquage sur la pièce d'habillage par des moyens adhésifs, notamment par collage, mais ceci peut présenter l'inconvénient d'engendrer la présence, par exemple au sein de l'habitacle, de composés organiques volatiles (COV) à la toxicité avérée.

Pour éviter le collage, la fixation de l'élément isolant sur la pièce d'habillage peut être mise en oeuvre par des moyens mécaniques, tels que des agrafes rapportées ou réalisées d'une pièce avec la pièce d'habillage par moulage. Les agrafes rapportées sont peu utilisées pour des raisons de coût. Les agrafes moulées avec la pièce d'habillage nécessitent la modification des moules par ajout d'artifices mécaniques supplémentaires dédiés appelés « mouvements », qui augmentent également le coût de fabrication de la pièce d'habillage. Enfin, en général, ces agrafes sont situées à distance des bords de la pièce d'habillage et ne permettent donc pas le maintien d'une couche de matériau isolant sur toute la surface de la garniture et notamment à proximité des bords.

Toutefois, dans le cadre d'une isolation thermique, il est préférable que la couche de matériau isolant recouvre sensiblement toute la surface de la pièce d'habillage et soit par conséquent maintenue à proximité des bords de cette dernière. Il peut alors s'avérer nécessaire d'ajouter des moyens mécaniques additionnels afin de fixer la couche de matériau isolant à proximité des bords de la pièce d'habillage, ce qui peut engendrer des coûts de mise en oeuvres supplémentaires non souhaitables. En outre, des solutions existantes consistent à intégrer une patte de maintien à un boîtier de fixation existant, cette patte de maintien s'étendant parallèlement à la pièce d'habillage et à la couche de matériau isolant. Ces solutions ne permettent cependant pas d'empêcher des mouvements de translation intempestifs de la couche de matériau isolant dans le plan parallèle à la pièce d'habillage, engendrant alors une réduction ou perte de la fonctionnalité voulue. Le document WO98/04438 décrit une pièce d'habillage d'après le préambule de la revendication 1.

Enfin, les systèmes existants ne permettent pas le maintien d'une couche d'air entre l'élément isolant et la pièce d'habillage en vue d'améliorer l'efficacité thermique, une telle couche d'air étant en général obtenue par la réalisation de nervures sur la face de la pièce d'habillage en regard de la couche de matériau isolant.

Il existe donc un besoin d'améliorer un système de maintien ou de positionnement d'une couche de matériau isolant sur une pièce d'habillage, qui soit plus simple à réaliser, associé à des coûts de mise en oeuvre réduits, et en outre plus performant en termes d'isolation phonique et/ou thermique.

A cet effet, l'objet de l'invention concerne une pièce d'habillage en matériau polymère d'un élément de carrosserie d'un véhicule automobile, ladite pièce d'habillage comprenant :
- une face interne destinée à être disposée en regard dudit élément de carrosserie,
- une pluralité d'éléments de fixation destinés à la fixation de ladite pièce d'habillage audit élément de carrosserie, et
- une pluralité d'éléments de maintien destinés au maintien d'une couche de matériau isolant,
lesdits éléments de fixation et de maintien étant issus du moulage de la pièce d'habillage du côté de ladite face interne, chaque élément de maintien étant intégré en partie ou totalement à un élément de fixation.

Par « intégré à un élément de fixation », on entend qu'un élément de maintien présente une partie solidaire d'un élément de fixation résultant du moulage de la pièce d'habillage. Un tel agencement permet de limiter les modifications du moule permettant de réaliser la pièce d'habillage, laquelle peut ainsi être réalisée à moindre coût, de manière simple. Il suffit en effet de modifier légèrement les dimensions et la forme de la cavité du moule destinée à former l'élément de fixation pour la formation de l'élément de maintien.

Une telle intégration des éléments de maintien aux éléments de fixation permet ainsi d'éviter de recourir à des systèmes de fixation additionnels coûteux. En outre, ces éléments de maintien étant mécaniques, il est possible de maintenir un élément isolant sans avoir à recourir à des moyens adhésifs, tels que la colle, évitant ainsi l'émanation de composés chimiques éventuellement toxiques.

La pièce d'habillage peut être réalisée en tout matériau polymère, par exemple en polypropylène chargé ou non, présentant une rigidité suffisante pour ne pas se déformer aux températures d'utilisation, qui peuvent être comprises de -30°C à 100°C.

Une telle pièce d'habillage peut être formée d'une paroi plane ou sensiblement plane. Chaque élément de maintien comprend deux éléments formant crochets s'étendant sensiblement perpendiculairement à la face interne et disposés en regard l'un de l'autre, lesdits éléments formant crochets étant conformés pour définir entre eux un logement ouvert dans une direction opposée à ladite face interne, ledit logement formant une partie de réception destinée à recevoir une portion d'un élément isolant. De tels éléments de maintien peuvent être réalisés de manière simple, en utilisant peu de matière.

Il est alors possible d'insérer une portion d'un élément isolant à l'intérieur de ce logement, l'élément isolant étant traversé par l'un des éléments formant crochets au moins. De plus, dans la mesure où les éléments formant crochets d'un même élément de maintien sont disposés en regard l'un de l'autre, des parties recourbées de ces éléments formant crochets sont face à face de sorte que l'ouverture du logement définie par ces éléments formant crochets présente une section de dimension inférieure à la section dudit logement, assurant un bon maintien d'une portion d'élément isolant située à l'intérieur du logement, tout au long de la vie du véhicule.

Les dimensions de l'ouverture du logement et du logement peuvent être avantageusement déterminées en fonction de la nature de l'élément isolant en forme de couche afin d'interdire le retrait de l'élément isolant hors du logement lors de la vie du véhicule tout en permettant une mise en place aisée de l'élément isolant à l'intérieur du logement au montage.

Avantageusement, ledit logement défini par les éléments formant crochets peut présenter une section rectangulaire ou carrée et/ou une ouverture évasée. Une section rectangulaire ou carrée peut permettre d'améliorer le maintien d'un élément isolant en forme de plaque, tandis que la forme évasée de l'ouverture peut faciliter l'insertion d'une portion de l'élément isolant à l'intérieur du logement.

Avantageusement et de manière non limitative, au moins un élément formant crochet d'un élément de maintien peut être solidaire d'une face d'un élément de fixation, par exemple une face sensiblement perpendiculaire à la face interne.

Notamment, l'un des éléments formant crochet peut être solidaire d'une face d'un élément de fixation notamment sur toute sa hauteur (perpendiculairement à la face interne). Dans ce cas, l'autre élément formant crochet situé en regard peut traverser la totalité de l'épaisseur de l'élément isolant. L'élément de fixation peut être en forme de boîtier creux en forme de polyèdre dont l'une des faces est solidaire de l'un des éléments formant crochets.

Lorsque la fonction de l'élément isolant est essentiellement acoustique, le logement défini entre les éléments formant crochets peut s'étendre jusqu'à la face interne de la pièce d'habillage. Le fond du logement, situé en regard de ladite ouverture, est alors formé par la face interne. Dans ce cas, il n'existe pas de couche d'air entre l'élément isolant maintenu par les éléments formant crochets et la pièce d'habillage. Lorsque le logement s'étend jusqu'à la face interne de la pièce d'habillage, seul l'un des éléments formant crochets d'un élément de maintien est intégré à l'élément de fixation, l'autre élément formant crochet étant situé à proximité.

Avantageusement et de manière non limitative, lesdits éléments formant crochets peuvent être agencés de sorte qu'un fond du logement, situé en regard de ladite ouverture, soit disposé à distance de ladite face interne, ceci notamment afin qu'une portion d'élément isolant maintenue par ces éléments formant crochets soit située à distance de la face interne, ce qui est particulièrement avantageux pour une utilisation de l'élément isolant comme isolant thermique. Dans ce cas, les deux éléments formant crochets peuvent être intégrés à l'élément de fixation. Ces éléments formant crochets peuvent alors présenter une base commune, de préférence solidaire de la face interne.

Cet agencement particulier du fond de logement peut être combiné à un réseau de nervures normales au plan de la face interne, réparties sur au moins une partie de la surface de la pièce d'habillage, dont la hauteur peut être de 2 à 15mm, de préférence de 2 à 10mm ou de 4 à 10mm. Un tel réseau de nervures permet de garantir la présence d'une couche isolante sur la majeure partie de la surface de la pièce d'habillage.

Les éléments de maintien peuvent en outre être agencés pour assurer la présence d'une couche d'air entre un élément isolant ainsi maintenu et l'élément de carrosserie après montage de la pièce d'habillage sur l'élément de carrosserie. Ceci peut par exemple être obtenu par un positionnement adapté de ladite partie de réception, entre la face interne d'une part et l'élément de carrosserie d'autre part.

Avantageusement, un élément de maintien peut être disposé sur un côté d'un élément de fixation situé à distance d'un bord de la pièce d'habillage. Autrement dit, un élément de fixation peut être situé entre un bord de la pièce d'habillage et un élément de maintien.

De manière générale, les éléments de fixation peuvent être répartis, de préférence régulièrement, sur la périphérie de la pièce d'habillage, notamment à proximité d'un bord de la pièce d'habillage, ce qui permet un maintien d'un élément isolant en forme de couche au niveau de la périphérie de la pièce d'habillage. Ceci est particulièrement avantageux lorsque la fonction principale de l'élément isolant est l'isolation thermique.

Avantageusement et de manière non limitative, chaque élément de fixation peut être un boîtier creux en forme de polyèdre, dont une face sensiblement perpendiculaire à ladite face interne est ouverte et chaque élément de maintien est adjacent à ladite face ouverte et peut s'étendre dans la continuité (dans le prolongement) de ladite face ouverte, dans un même plan ou dans un plan incliné d'un angle d'au maximum 30°.

Autrement dit, l'élément de maintien peut s'étendre dans le même plan que le plan de la face ouverte ou s'en écarter d'un angle pouvant aller jusqu'à 30° par rotation autour d'un axe perpendiculaire à la face interne de la pièce d'habillage.

Un tel agencement permet notamment de faciliter les opérations de moulage, le retrait d'une partie de moule s'effectuant dans la direction de l'ouverture du boîtier, sensiblement perpendiculairement à la face ouverte du boîtier.

Le boîtier en forme de polyèdre peut être un parallélépipède, notamment un parallélépipède droit, ou bien un prisme droit dont par exemple la base, située dans le plan de la face interne, peut être un trapèze ou triangle, la forme du boîtier étant choisie en fonction de l'environnement de la pièce d'habillage afin de permettre son moulage.

La forme et la dimension du boîtier n'est cependant pas limitée. Le boîtier peut présenter une face plane, au voisinage de la face interne de l'élément de carrosserie, de préférence sensiblement parallèle à la face interne, laquelle face plane peut avantageusement définir un orifice traversant destiné à recevoir un élément de solidarisation de la pièce d'habillage à l'élément de carrosserie, tels que des agrafes, des rivets, des vis, ou autres. Cette face plane peut s'étendre jusqu'à un rebord de la pièce d'habillage, par exemple par des parties repliées.

Pour réduire la quantité de matière utilisée, l'une des faces de chaque boîtier creux peut être formée par la face interne.

Avantageusement et de manière non limitative, la pièce d'habillage peut comprendre un rebord sensiblement perpendiculaire à ladite face interne et une face d'un boîtier creux peut être formée par ledit rebord. Cet agencement permet également une économie de matière tout en améliorant la rigidité du rebord et en permettant un positionnement de l'élément de fixation, et par conséquent de l'élément de maintien, au plus près du bord de la pièce d'habillage.

De manière générale, le rebord de la pièce d'habillage peut s'étendre sur toute la périphérie de cette dernière et peut être agencé pour que son bord libre soit en appui contre l'élément de carrosserie lorsque la pièce d'habillage est fixée à celui-ci. La hauteur de ce rebord, mesurée perpendiculairement à la face interne, définit alors la distance entre la pièce d'habillage et l'élément de carrosserie après leur assemblage.

Avantageusement et de manière non limitative, la hauteur de ce rebord peut être déterminée en fonction de l'épaisseur de l'élément isolant à maintenir et/ou en fonction de l'espace vide souhaité entre l'élément isolant et la face interne de la pièce d'habillage et/ou entre l'élément isolant et l'élément de carrosserie. Ces espaces vides peuvent être de l'ordre de 2 à 15mm, avantageusement de 4 à 10 mm, de préférence de 8 à 10mm.

L'invention concerne également un ensemble d'habillage d'un élément de carrosserie d'un véhicule automobile comprenant une pièce d'habillage selon l'invention et un élément isolant en forme de plaque, ledit élément isolant étant conformé pour coopérer avec les éléments de maintien de ladite pièce d'habillage. Un tel élément isolant peut être une plaque en mousse polymère, par exemple en polyuréthane à cellules ouvertes ou en feutre de fibres, ce feutre pouvant être constitué de fibres de polymère extrudé ou de fibres issues de tissus recyclés déchiquetés.

L'épaisseur de l'élément isolant n'est pas limitée, mais elle peut être de quelques millimètres, typiquement de de 3 à 30mm.

Avantageusement et de manière non limitative, ledit élément isolant peut présenter une pluralité de paires de découpes délimitant entre elles des portions d'élément isolant conformées pour être insérées à l'intérieur de parties de réception desdits éléments de maintien. Du fait de l'insertion d'une pluralité de portions d'élément isolant, ce dernier est solidement maintenu par les éléments de maintien sur la pièce d'habillage, limitant les risques de décrochage au cours de la vie du véhicule.

Notamment, certaines découpes peuvent être conformées pour entourer partiellement ou totalement chaque élément de fixation. Il peut s'agir par exemple de parties évidées. Ceci peut permettre de favoriser le maintien de l'élément isolant dans un plan sensiblement parallèle à la face interne de la pièce d'habillage. D'autres découpes notamment celles coopérant avec les éléments de maintien, peuvent être de simples fentes pour l'insertion par exemple d'un élément formant crochet d'élément de maintien.

L'invention concerne également un véhicule automobile comprenant au moins une pièce d'habillage selon l'invention ou au moins un ensemble d'habillage selon l'invention, notamment fixée à un élément de carrosserie. Une telle pièce d'habillage est par exemple une garniture de porte.

L'invention est maintenant décrite plus en détails en référence aux dessins annexés, non limitatifs, dans lesquels :
- la figure 1 est une vue schématique partielle en coupe d'une pièce d'habillage selon un mode de réalisation de l'invention assemblée à un élément de carrosserie ;
- la figure 2 est une vue en perspective partielle d'un élément de la pièce d'habillage représentée figure 1,
- la figure 3 est une vue en perspective de la pièce d'habillage représentée sur les figures 1 et 2, pourvue d'un élément isolant,
- la figure 4 est une vue de dessus de la pièce d'habillage et de l'élément isolant représentés figure 3.

Par sensiblement parallèle ou perpendiculaire, on entend une direction/un plan formant un angle d'au plus ±20°, voire d'au plus ±10°, avec une direction/un plan parallèle ou perpendiculaire.

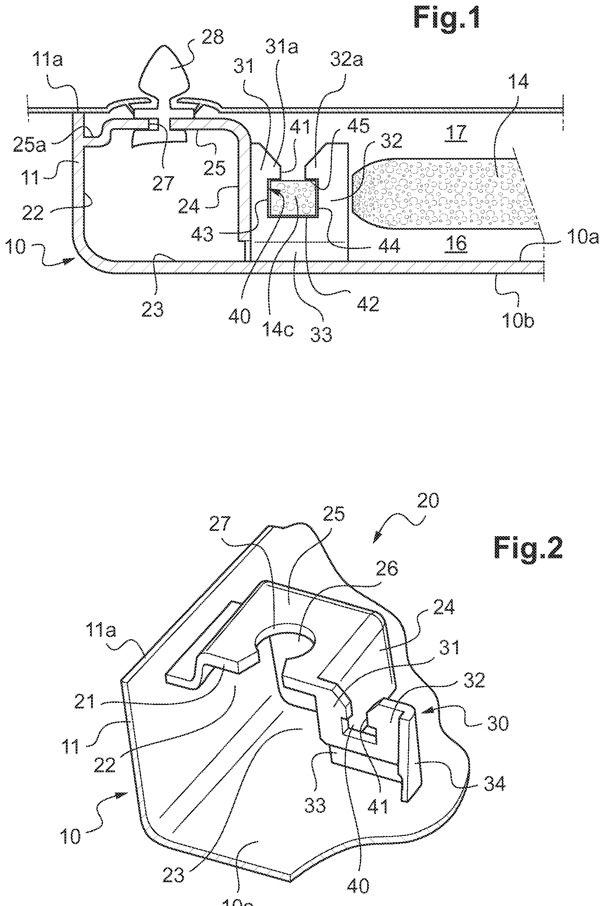

La figure 1 représente une vue en coupe d'une pièce d'habillage 10 en matériau polymère selon un mode de réalisation de l'invention. Cette pièce d'habillage 10 habille un élément de carrosserie 12, par exemple une tôle, telle qu'une tôle faisant partie d'une structure d'habitacle du véhicule, par exemple une structure de porte.

Un élément isolant 14 est également disposé entre la pièce d'habillage 10 et l'élément de carrosserie 12. Cet élément isolant 14 se présente sous la forme d'une plaque de mousse polymère dans l'exemple représenté.

La pièce d'habillage 10 est une paroi sensiblement plane comprenant une face interne 10a disposée en regard de l'élément de carrosserie 12 et une face externe 10b, opposée, visible de l'intérieur du véhicule.

La pièce d'habillage 10 représentée dans l'exemple comporte également un rebord 11 sensiblement perpendiculaire à la face interne 10a. Ce rebord 11 s'étend de préférence sur toute la périphérie de la pièce d'habillage 10 et son bord libre 11a vient en butée contre l'élément de carrosserie 12, tel que visible sur la figure 1.

La pièce d'habillage 10 comprend en outre :
- une pluralité d'éléments de fixation 20 destinés à la fixation de ladite pièce d'habillage audit élément de carrosserie 12, et
- une pluralité d'éléments de maintien 30 de l'élément isolant 14.

Ces éléments de fixation 20 et de maintien 30 sont issus du moulage de la pièce d'habillage 10 du côté de la face interne 10a.

Selon l'invention, chaque élément de maintien 30 est intégré en partie ou totalement à un élément de fixation 20.

Seul un élément de fixation et un élément de maintien sont représentés sur les figures de l'exemple décrit.

L'élément de fixation 20 représenté sur les figures est un boîtier creux en forme de parallélépipède rectangle.

Cet élément de fixation 20 comporte une face ouverte 21 sensiblement perpendiculaire à la face interne 10a. Autrement dit, cette face ouverte 21 est dépourvue de paroi et forme une ouverture pour le boîtier creux.

Cette face ouverte 21 définit la direction de démoulage du boîtier creux, à savoir une direction perpendiculaire à cette face ouverte 21.

L'élément de fixation 20 comprend en outre :
- une face 22 formée par le rebord 11,
- une face 23 formée par la face interne 10a,
- une face 24 parallèle à la face 22,
- une face 25 parallèle à la face interne 10a et distante de celle-ci,
- une face 26 parallèle à la face ouverte 21.

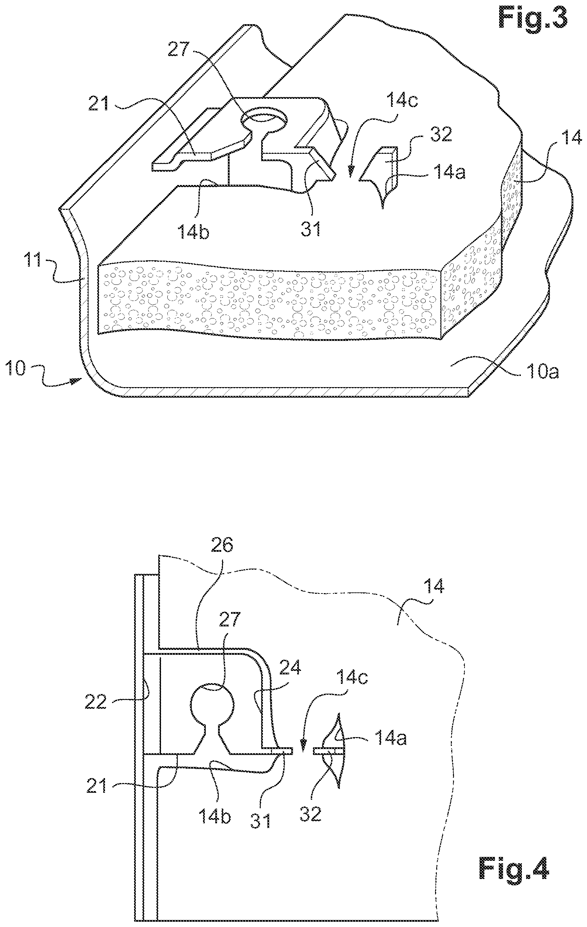

L'élément de fixation 20 comprend également sur la face 25, laquelle forme la face supérieure du boîtier, un orifice traversant 27, lequel peut s'étendre jusqu'à la face ouverte 21 de manière à former un orifice en « trou de serrure » tel que visible sur les figures 2 à 4, notamment pour des facilités de démoulage de la pièce d'habillage 10. Cet orifice traversant 27 reçoit un moyen de fixation 28 (représenté uniquement figure 1) de la pièce d'habillage 10 à l'élément de carrosserie 12. Le moyen de fixation 28 représenté ici est de type rivet. La face 25 est par ailleurs reliée au rebord 11 par un épaulement 25a de manière à être située au plus près de l'élément de carrosserie 12 lors du montage de la pièce d'habillage 10 sur ce dernier.

Les parties des faces 24 et 26 en contact avec la face interne 10a peuvent présenter une épaisseur amoindrie afin de réduire les risques de formation de retassures sur la face externe 10b lors du moulage de la pièce d'habillage 10.

L'élément de maintien 30 associé à l'élément de fixation 20 représenté sur les figures est adjacent à la face ouverte 21 et s'étend dans la continuité de celle-ci, dans même un plan.

L'élément de maintien 30 comprend également une partie de réception 40 s'étendant à distance de la face interne 10a et destinée à recevoir une portion de l'élément isolant 14.

De manière plus précise, l'élément de maintien 30 comprend deux éléments formant crochets 31, 32 s'étendant sensiblement perpendiculairement à la face interne 10a et disposés en regard l'un de l'autre. Ces éléments formant crochets 31, 32 sont conformés pour définir entre eux un logement ouvert dans une direction opposée à la face interne 10a. C'est ce logement qui forme la partie de réception 40 destinée à recevoir une portion de l'élément isolant 14.

Chaque élément formant crochet 31, 32 présente ainsi une extrémité libre (distale de la face interne 10a) comportant une saillie 31a, 32a, respectivement, ces saillies 31a, 32a s'étendant l'une en direction de l'autre, parallèlement à la face interne 10a. Ces saillies 31a, 32a, qui sont ainsi recourbées par rapport à la direction d'extension des éléments formant crochets, à savoir une direction perpendiculaire à la face interne 10a, délimitent l'ouverture 41 du logement 40.

Une portion de l'élément isolant 14 peut ainsi être insérée à l'intérieur du logement 40 par l'ouverture 41, suivant une direction sensiblement perpendiculaire à la face interne 10a. Le logement 40 de l'exemple présente une section rectangulaire et une ouverture 41 évasée vers l'extérieur, ce qui permet de faciliter l'insertion de la portion d'élément de carrosserie à l'intérieur du logement 40.

Le logement 40 de section rectangulaire est ainsi délimité par une partie de fond 42 sensiblement parallèle à la face interne 10a, deux parties latérales 43, 44 perpendiculaires à la partie de fond 42 et une partie 45 opposée à la partie de fond 42 et parallèle à cette dernière, au centre de laquelle débouche l'ouverture 41.

La section du logement 40 est de préférence de dimension supérieure à la section de l'ouverture 41, tel que représenté, ce qui limite les risques de retrait de la portion d'élément isolant 14 hors du logement 40. Les dimensions du logement 40 seront choisies en fonction de la nature de l'élément isolant 14, notamment de son épaisseur et de sa densité. A titre d'exemple, les parties latérales 43, 44 peuvent être distantes d'une distance de 5 à 30 mm, par exemple de l'ordre de 10mm.

On notera que la partie de fond 42 du logement 40 est située à distance de la face interne 10a de la pièce d'habillage, assurant un espace vide 16 entre l'élément isolant 14 et la face interne 10a de la pièce d'habillage 10.

Dans l'exemple représenté, les éléments formant crochets 31, 32, solidaires par leur base 33, s'étendent sensiblement perpendiculairement à la face interne 10a, dans la continuité de la face ouverte 21 de l'élément de fixation 20. La base commune 33 des éléments formant crochets 31, 32 peut présenter une épaisseur amoindrie au niveau de sa jonction avec la face interne 10a, ceci afin d'éviter la formation de retassures, non esthétiques, sur la face externe 10b de la pièce d'habillage 10 lors de son moulage.

En outre, l'un des éléments formant crochets 32, notamment celui distant de l'élément de fixation 20, peut comprendre une nervure 34 de rigidification s'étendant perpendiculairement à la face interne 10a et au plan de l'élément formant crochet 32, d'un côté ou de l'autre du plan du élément formant crochet 32.

Dans cet exemple, la partie de réception 40 (ou logement 40) est située sensiblement à mi-distance entre la face interne 10a de la pièce d habillage 10 et l'élément de carrosserie 12, de sorte que l'élément isolant 14 s'étend à mi-distance de ces deux pièces. Un vide d'air 17 est ainsi ménagé entre l'élément de carrosserie 12 et l'élément isolant 14, permettant d'améliorer l'efficacité thermique de la pièce d'habillage et de l'élément isolant, en combinaison avec le vide d'air 16.

Afin de permettre sa fixation sur la pièce d'habillage 10, l'élément isolant 14 comprend des découpes le traversant de part en part. Dans l'exemple représenté, l'élément isolant 14 comprend une découpe 14a en forme de fente et une découpe 14b formant un évidement de forme complémentaire à l'élément de fixation 30. Ces découpes 14a et 14b définissent entre elles une portion 14c d'élément isolant 14. Du fait de la présence de ces découpes 14a, 14b, la portion 14c peut être insérée à l'intérieur du logement 40 en exerçant une pression perpendiculairement à la face interne 10a, en direction de celle-ci. L'élément formant crochet 32 situé à distance de l'élément de fixation 20 traverse alors entièrement la découpe 14a.

Dans l'exemple représenté, les dimensions du logement sont telles que la portion 14c d'élément isolant 14 est comprimée à l'intérieur du logement, telle que visible figure 1, garantissant un bon maintien de cet élément isolant 14.

## Revendications

1. Pièce d'habillage (10) en matériau polymère d'un élément de carrosserie (12) d'un véhicule automobile, ladite pièce d'habillage comprenant :
- une face interne (10a) destinée à être disposée en regard dudit élément de carrosserie (12),
- une pluralité d'éléments de fixation (20) destinés à la fixation de ladite pièce d'habillage (10) audit élément de carrosserie (12), et
- une pluralité d'éléments de maintien (30) destinés au maintien d'une couche de matériau isolant (14),
lesdits éléments de fixation et de maintien étant issus du moulage de la pièce d'habillage du côté de ladite face interne, chaque élément de maintien (30) étant intégré en partie ou totalement à un élément de fixation (20), **caractérisée en ce que** chaque élément de maintien comprend deux éléments formant crochets (31, 32) s'étendant sensiblement perpendiculairement à la face interne (10a) et disposés en regard l'un de l'autre, lesdits éléments formant crochets (31, 32) étant conformés pour définir entre eux un logement (40) ouvert dans une direction opposée à ladite face interne (10a), ledit logement (40) formant une partie de réception destinée à recevoir une portion (14a) d'un élément isolant.

2. Pièce d'habillage (10) selon la revendication 1, **caractérisée en ce que** ledit logement (40) présente une section rectangulaire ou carrée et/ou une ouverture (41) évasée.

3. Pièce d'habillage (10) selon l'une des revendications 1 ou 2, **caractérisée** au moins un élément formant crochet (31) d'un élément de maintien est solidaire d'une face d'un élément de fixation, par exemple une face (21) sensiblement perpendiculaire à la face interne.

4. Pièce d'habillage (10) selon l'une des revendications 1 à 3, **caractérisée en ce que** lesdits éléments formant crochets (31, 32) sont agencés de sorte qu'un fond (42) du logement, situé en regard de ladite ouverture (41), soit disposé à distance de ladite face interne (10a).

5. Pièce d'habillage (10) selon l'une des revendications 1 à 4, **caractérisée en ce que** chaque élément de fixation (20) est un boîtier creux en forme de polyèdre, dont une face (21) sensiblement perpendiculaire à ladite face interne (10a) est ouverte et **en ce que** chaque élément de maintien est adjacent à ladite face ouverte et s'étend dans la continuité de ladite face ouverte, dans un même plan ou dans un plan incliné d'un angle d'au maximum 30° par rapport à cette face ouverte (21).

6. Pièce d'habillage (10) selon la revendication 5, **caractérisée en ce qu'**elle comprend un rebord (11) sensiblement perpendiculaire à ladite face interne (10a) et **en ce qu'**une face (22) d'un boîtier creux est formée par ledit rebord.

7. Ensemble d'habillage d'un élément de carrosserie d'un véhicule automobile comprenant une pièce d'habillage (10) selon l'une des revendications 1 à 6 et un élément isolant (14) en forme de plaque, ledit élément isolant (14) étant conformé pour coopérer avec les éléments de maintien (30) de ladite pièce d'habillage.

8. Ensemble d'habillage selon la revendication 7, **caractérisée en ce que** ledit élément isolant (14) présente une pluralité de paires de découpes (14a, 14b) délimitant entre elles des portions (14c) d'élément isolant (14) conformées pour être insérées à l'intérieur de parties de réception (40) desdits éléments de maintien (30).

9. Véhicule automobile comportant au moins une pièce d'habillage (10) telle que définie selon l'une des revendications 1 à 6 ou au moins un ensemble d'habillage selon la revendication 7.

## Patentansprüche

1. Verkleidungsteil (10) aus Polymermaterial für ein Karosserieelement (12) eines Kraftfahrzeugs, wobei das Verkleidungsteil Folgendes aufweist:
- eine Innenfläche (10a), die dazu bestimmt ist, gegenüber dem Karosserieelement (12) angeordnet zu werden,
- mehrere Befestigungselemente (20), die zum Befestigen des Verkleidungsteils (10) an dem Karosserieelement (12) bestimmt sind, und
- mehrere Halteelemente (30), die zum Halten einer Schicht aus isolierendem Material (14) bestimmt sind,
wobei die Befestigungs- und Halteelemente aus dem Formen des Verkleidungsteils auf der Seite der Innenfläche hervorgegangen sind,
wobei jedes Halteelement (30) teilweise oder vollständig in einem Befestigungselement (20) integriert ist,
**dadurch gekennzeichnet, dass** jedes Halteelement zwei Hakenelemente (31, 32) aufweist, die sich im Wesentlichen senkrecht zu der Innenfläche (10a) erstrecken und einander gegenüberliegend angeordnet sind, wobei die Hakenelemente (31, 32) ausgebildet sind, um zwischen sich eine Aufnahme (40) zu bilden, die in eine Richtung offen ist, die der Innenfläche (10a) gegenüberliegt, wobei die Aufnahme (40) einen Aufnahmeteil bildet, der dazu bestimmt ist, einen Abschnitt (14a) eines isolierenden Elementes aufzunehmen.

2. Verkleidungsteil (10) nach Anspruch 1, **dadurch gekennzeichnet, dass** die Aufnahme (40) einen rechteckigen oder quadratischen Querschnitt und/oder eine aufgeweitete Öffnung (41) aufweist.

3. Verkleidungsteil (10) nach einem der Ansprüche 1 oder 2, **dadurch gekennzeichnet, dass** mindestens ein Hakenelement (31) eines Halteelements mit einer Fläche eines Befestigungselements, beispielsweise einer Fläche (21), die im Wesentlichen senkrecht zu der Innenfläche ist, fest verbunden ist.

4. Verkleidungsteil (10) nach einem der Ansprüche 1 bis 3, **dadurch gekennzeichnet, dass** die Hakenelemente (31, 32) derart angeordnet sind, dass ein Boden (42) der Aufnahme, der gegenüber der Öffnung (41) angeordnet ist, von der Innenfläche (10a) beabstandet angeordnet ist.

5. Verkleidungsteil (10) nach einem der Ansprüche 1 bis 4, **dadurch gekennzeichnet, dass** jedes Befestigungselement (20) ein hohles Gehäuse von polyedrischer Form ist, dessen eine Fläche (21), die im Wesentlichen senkrecht zu der Innenfläche (10a) ist, offen ist und dadurch, dass jedes Halteelement angrenzend an die offene Fläche ist und sich in der Kontinuität der offenen Fläche in einer gleichen Ebene oder in einer Ebene, die um einen Winkel von maximal 30° gegenüber dieser offenen Fläche (21) geneigt ist, erstreckt.

6. Verkleidungsteil (10) nach Anspruch 5, **dadurch gekennzeichnet, dass** es einen Rand (11) aufweist, der im Wesentlichen senkrecht zu der Innenfläche (10a) ist, und dadurch, dass eine Fläche (22) eines hohlen Gehäuses durch den Rand gebildet ist.

7. Verkleidungsbaugruppe eines Karosserieelements eines Kraftfahrzeugs, umfassend ein Verkleidungsteil (10) nach einem der Ansprüche 1 bis 6 und ein Isolierelement (14) in Plattenform, wobei das Isolierelement (14) ausgebildet ist, um mit den Halteelementen (30) des Verkleidungsteils zusammenzuwirken.

8. Verkleidungsbaugruppe nach Anspruch 7, **dadurch gekennzeichnet, dass** das Isolierelement (14) mehrere Paare von Ausschnitten (14a, 14b) aufweist, die zwischen einander Abschnitte (14c) eines Isolierelements (14) begrenzen, die ausgebildet sind, um ins Innere von Aufnahmeteilen (40) der Halteelemente (30) eingefügt zu werden.

9. Kraftfahrzeug, umfassend mindestens ein derartiges Verkleidungsteil (10), wie nach einem der Ansprüche 1 bis 6 definiert, oder mindestens eine Verkleidungsbaugruppe nach Anspruch 7.

## Claims

1. Liner part (10) of polymer material for a body element (12) of a motor vehicle, said liner part comprising:
- an inner face (10a) intended to be arranged opposite said body element (12),
- a plurality of fixing elements (20) intended to fix said liner part (10) to said body element (12), and
- a plurality of retaining elements (30) intended to retain an insulating material layer (14),
said fixing and retaining elements resulting from the moulding of the liner part on said inner face side, each retaining element being partially or completely integrated into a fixing element (20), **characterized in that** each retaining element comprises two hook-forming elements (31, 32) extending substantially perpendicularly to the inner face (10a) and arranged opposite one another, said hook-forming elements (31, 32) being configured to define between them a housing (40) which is open in a direction opposed to said inner face (10a), said housing (40) forming a receiving part intended to receive a portion (14a) of an insulating element.

2. Liner part (10) according to Claim 1, **characterized in that** said housing (40) has a rectangular or square cross section and/or a flared opening (41).

3. Liner part (10) according to either of Claims 1 and 2, **characterized in that** at least one hook-forming element (31) of a retaining element is secured to a face of a fixing element, for example a face (21) substantially perpendicular to the inner face.

4. Liner part (10) according to one of Claims 1 to 3, **characterized in that** said hook-forming elements (31, 32) are arranged such that a bottom (42) of the housing, situated opposite said opening (41), is arranged at a distance from said inner face (10a).

5. Liner part (10) according to one of Claims 1 to 4, **characterized in that** each fixing element (20) is a hollow box in the form of a polyhedron, of which a face (21) which is substantially perpendicular to said inner face (10a) is open, and **in that** each retaining element is adjacent to said open face and extends in the continuity of said open face, in the same plane or in a plane inclined by an angle of at most 30° with respect to this open face (21).

6. Liner part (10) according to Claim 5, **characterized in that** it comprises a rim (11) substantially perpendicular to said inner face (10a), and **in that** a face (22) of a hollow box is formed by said rim.

7. Liner assembly for a body element of a motor vehicle comprising a liner part (10) according to one of Claims 1 to 6 and an insulating element (14) in the form of a sheet, said insulating element (14) being configured to cooperate with the retaining elements (30) of said liner part.

8. Liner assembly according to Claim 7, **characterized in that** said insulating element (14) has a plurality of pairs of cutouts (14a, 14b) delimiting between them portions (14c) of the insulating element (14) which are configured to be inserted within receiving parts (40) of said retaining elements (30).

9. Motor vehicle comprising at least one liner part (10) as defined according to one of Claims 1 to 6 or at least one liner assembly according to Claim 7.
